# FASCICULE DE BREVET EUROPEEN

(11) **EP 2 697 421 B1**
(45) Date de publication et mention de la délivrance du brevet: **02.07.2025**
(21) Numéro de dépôt: 12722852.6
(22) Date de dépôt: 06.04.2012
(51) Int. Cl.: D06M 15/643, D06B 3/04, G01N 19/02

(54) **FIL TEXTILE, SON PROCÉDÉ DE RÉALISATION, L'INSTALLATION DE MISE EN UVRE DU PROCÉDÉ, ET UTILISATION DU FIL.**
GARN, HERSTELLUNGSVERFAHREN DAFÜR, ANLAGE ZUR UMSETZUNG DES VERFAHRENS UND VERWENDUNG DES GARNS
YARN, METHOD FOR MANUFACTURING SAME, FACILITY FOR IMPLEMENTING THE METHOD, AND USE OF THE YARN

(30) Priorité: 12.04.2011 FR 1153161
(43) Date de publication de la demande: 19.02.2014
(73) Titulaire: Massebeuf Textiles, 07380 Pont de Labeaume (FR)
(72) Inventeur: MASSEBEUF, Patrick, F-07000 Privas (FR); NOWAK, Pascal, F-07200 Mercuer (FR)
(74) Mandataire: Thurgood, Alexander John
(86) Numéro de dépôt international: PCT/IB2012/051727
(87) Numéro de publication internationale: WO 2012/140558

(56) Documents cités:
- EP-A2- 0 389 196
- FR-A- 1 544 616
- US-A- 3 749 055
- US-A1- 2002 168 481
- "Processing yarn for weaving and knitting - by coating with mixt. of di:methyl polysiloxane and emulsifier in molten wax and air-jet drying, gives fluff-less smooth surface", WPI / THOMSON,, vol. 1983, no. 6, 23 December 1982 (1982-12-23), XP002669115
- DATABASE WPI Week 198306, Derwent World Patents Index; AN 1983-13356K, XP002669115

## Description

La présente invention concerne le secteur textile, et plus particulièrement un fil textile, son procédé de fabrication, l'installation permettant de mettre en œuvre le procédé de fabrication, ainsi que les différentes utilisations du fil réalisé.

Dans le domaine du textile, il est connu d'apporter à un produit de base, tissé ou tricoté, des fonctions spécifiques telles que anti-glisse, tenue thermique, comportement au feu, isolation thermique, isolation phonique, amortissements des chocs, etc.

Généralement, pour réaliser l'une de ces fonctions, on procède par enduction d'un polymère de silicone d'une composition spécifique adaptée à la fonction recherchée. Cette enduction du support textile augmente le coût étant donné qu'elle constitue une opération de confection supplémentaire. De même, cette confection supplémentaire peut modifier les caractéristiques de base du support textile. Par exemple, elle peut modifier l'élasticité du support textile ce qui peut, dans le cas d'un article chaussant tel que bas ou chaussettes, créer un certain inconfort et même provoquer un effet de garrot. En outre, sous l'effet de l'enduction du polymère siliconé le support textile n'est plus respirant accentuant un éventuel phénomène de transpiration du corps humain. Par ailleurs, cette rétention d'eau, en considérant les propriétés du silicone, va créer un phénomène de glissement qui peut aller à rencontre du but recherché qui est justement d'obtenir une fonction anti-glisse, par exemple.

Selon la demande de brevet EP0389196, on a déjà décrit un fil enduit d'un polymère siliconé, c'est-à-dire que le fil a été enduit avec une solution diluée de prépolymère de polysiloxane, qui est ensuite polymérisé et fixé sur le fil par application de chaleur. Toutefois, le fil décrit dans cette demande de brevet antérieur, qui est exemplifié sous forme de fil de nettoyage interdentaire, ne convient pas à des applications dans lesquelles le fil doit être tricoté ou tissé, notamment à cause du type de polysiloxane utilisé, qui confère au fil une sensation plus lisse et agréable dans la bouche de l'utilisateur.

Le document XP002669115A, se référant à un abrégé de demande de brevet japonais publiée sous le numéro JP57210069A divulgue un fil textile revêtu d'une solution de traitement obtenue en ajoutant 2 à 5 % de diméthylpolysiloxane et la même teneur en émulsifiant, à 90 à 97 % de cire fondu présentant un point de fusion de 45 à 75°C, suivi d'une solidification du revêtement sur le fil par application d'un jet d'air froid.

Le problème que se propose de résoudre l'invention est donc de réaliser un fil textile apte à remplir certaines fonctions, entre autres par exemple la fonction anti-glisse ou « grip », par exemple, en ayant pour objectif de pouvoir continuer à tisser ou tricoter ce fil, et ce sans que ledit fil enduit pose des problèmes potentiels ou réels de blocage des machines à tricoter ou à tisser ou de rupture ou entremêlement du fil pendant le processus de tissage ou de tricotage.

Une propriété particulièrement recherchée dans les fils selon la présente invention est une certaine capacité de résistance à un effort de déplacement, lorsque celui-ci se trouve en appui contre une surface, par exemple la peau, ce qui rend le fil adapté à une incorporation dans des vêtements ou autres éléments textiles devant venir au contact avec la peau, et permettant auxdits vêtements ou éléments textiles de ne pas glisser. Or, en général, et comme illustré par le document antérieur cité ci-dessus, il était plutôt connu d'utiliser des silicones pour augmenter la capacité d'un fil à glisser contre une telle surface, ou en l'occurrence dans ce document antérieur, une membrane muqueuse.

Un objet de l'invention est donc un fil textile comprenant un fil de base (1) enduit d'un polymère siliconé (2), ledit fil siliconé (F) étant apte à être tissé ou tricoté, caractérisé en ce que :
le polymère siliconé se présente sous forme de gaine concentrique autour du fil de base ;
le fil textile enduit est calibré et comporte entre 15% et 85% en poids de polymère siliconé réticulé par rapport au poids total du fil enduit.

Selon l'invention, le fil textile comprend un fil de base, de préférence choisi dans le groupe consistant en :
- les fils synthétiques, tels que le polyamide, le polyester, le polyterephthalate, le polytetrafluoroethylène, le polypropylène, le polyéthylène, le polychlorure de vinyle, leurs copolymères, etc ;
- les fils d'origine minérale, tels que les fils de verre, de silice, de métal, tel que le titane, le cuivre le fer, l'acier ou leurs alliages ;
- les fils naturels, à base de cellulose, tels que par exemple le coton, ou à base de protéines, telles que la laine ou la kératine,
- les fils hybrides ou dérivés, c'est à dire des fils pris dans l'une des catégories précédentes et modifiées par traitement chimique, physique ou mécanique, pour donner un fil hybride modifié, par exemple rendus hydrophobes, ou hydrophiles, ou encore dopés en éléments isolants ou conducteurs.

De préférence, le fil est choisi parmi les fils synthétiques et les fils d'origine minérale, et plus préférentiellement encore est un fil de polyamide, un fil de polyester ou un fil de verre.

De préférence, le fil enduit présente un titre supérieur ou égal à 25 décitex. Ceci permet, par exemple, et de préférence, d'utiliser des fils de base présentant un titre compris entre 22 décitex et 5000 décitex.

Selon un mode préféré de l'invention, le fil comporte entre 15% et 85% en poids de polymère siliconé réticulé par rapport au poids total du fil enduit.

En ce qui concerne le choix du polymère siliconé à utiliser pour l'enduction du fil de base, il est préféré que le polymère siliconé comprenne au moins un polyorganosiloxane. Il est encore plus préféré que le polymère siliconé soit constitué d'un mélange de deux polyorganosiloxanes. Plus préférentiellement encore, le polymère siliconé est constitué d'un mélange de deux polyorganosiloxanes, et dont l'un des composants est un catalyseur de la réaction de polymérisation. Afin de faciliter l'application du polymère siliconé, et d'économiser de l'énergie lors de son application, il est préféré que le polymère siliconé soit liquide à température ambiante et de préférence on choisira alors un mélange bicomposant de polyorganosiloxanes, appliqué sous forme d'élastomère à l'état liquide avant polymérisation. Le polymère siliconé est alors avantageusement constitué d'un mélange bicomposant de polyorganosiloxanes se réticulant par une réaction de polyaddition à une température comprise entre 150°C et 350°C pendant 3 à 10 secondes. De préférence encore, pour faciliter la mise en œuvre de l'application du polymère sur le fil de base, on préférera un polymère siliconé à basse viscosité, de préférence inférieure ou égale à 20000mPa.s à 23°C à pression ambiante. Enfin, de manière encore plus préférée, le polymère siliconé est constitué d'un mélange bicomposant de polyorganosiloxanes présentant une viscosité de 2500 mPa.s, mesurée par viscosimètre Brookfield, aiguille numéro 2, vitesse de rotation 5 tours/min.

Une des caractéristiques marquantes du fil textile selon l'invention est que la couche de polymère siliconé réticulé ne présente sensiblement aucune bulle d'air. De préférence, la couche de polymère siliconé réticulé présente un taux de bulles d'air inférieur à une bulle par centimètre linéaire de fil enduit. En effet, au-delà de cette valeur, il y a un risque d'arrachage de la couche de polymère siliconé ce qui rendra le tricotage ou tissage difficile, voire problématique, et en outre il y a un risque de produire un fil avec des valeurs de grip souhaitées trop basses ou insuffisantes pour les applications envisagées du fil. De préférence, on estime qu'à partir d'une valeur de « grip » de 0,5 N l'on a un grip suffisant pour les applications de tissage et tricotage envisagées.

Une autre caractéristique d'un tricot de fil enduit selon la présente invention est qu'il présente un « grip » dont les valeurs sont comprises entre 0,7 N et 2,4 N à 20°C ± 2°C, et 65°C ± 5% HR (humidité relative), pour une vitesse constante de 20 mm/min, mesurées selon la méthode suivante :
- on fixe un frotteur métallique de 248 grammes et de surface carré 25cm² à un capteur de force ;
- on déplace ledit frotteur sur un échantillon tricoté de fil textile enduit, fixé sur un support horizontal ;
- on mesure la force nécessaire pour maintenir le frotteur en mouvement à vitesse constante.

Selon un autre mode préféré de l'invention, un tricot de fil selon l'invention présente un « grip » dont les valeurs sont comprises entre 0,8 N et 2,8 N à 20°C ± 2°C, et 65% ± 5% HR (humidité relative), pour une vitesse constante de 100 mm/min, mesuré selon la méthode suivante :
- on fixe un frotteur métallique de 248 grammes et de surface carré 25cm² à un capteur de force ;
- on déplace ledit frotteur sur un échantillon tricoté de fil textile enduit, fixé sur un support horizontal ;
- on mesure la force nécessaire pour maintenir le frotteur en mouvement à vitesse constante.

Une méthode de mesure d'un « grip » d'un tricot de fil textile enduit comprend les étapes consistant à :
- fixer un frotteur métallique de 248 grammes et de surface carré 25cm² à un capteur de force ;
   - déplacer ledit frotteur sur un échantillon tricoté de fil textile enduit, fixé sur un support horizontal ; et
   - mesurer la force nécessaire pour maintenir le frotteur en mouvement à vitesse constante.

De préférence, la vitesse constante est choisie dans le groupe consistant en 20 mm/min et 100 mm/min.

De manière préférentielle, les mesures sont effectuées à une température de 20°C ± 2°C, et à une humidité relative (HR) de 65% ± 5%.

Cette méthode est comparable à celle de la norme ISO EN 14 882 relative à la détermination des coefficients de frottements, pour mettre en valeur le « grip » que donne un tricot de fil enduit de polymère siliconé selon la présente invention. Un frotteur est fixé à un capteur de force. Il se déplace sur l'éprouvette qui est fixée sur un support horizontal, et on mesure la force nécessaire pour maintenir le frotteur en mouvement à vitesse constante. Les conditions opératoires sont les suivantes :
- atmosphère de conditionnement et d'essai 20 ± 2°C, 65 ± 5% HR
- vitesse constante : 20 mm/min ou 100 mm/min
- appareil utilisé : dynamomètre à gradient d'allongement constant
- frotteur métal de surface carré 25cm², de 248 g.

Cette méthode a été appliquée à quelques échantillons de tricot de de fil réalisés selon la présente invention. Les résultats sont présentés dans le tableau ci-dessous :

| Référence tricot | | Nu | 10M104-1 | 10M07-12 |
|---|---|---|---|---|
| Taux de silicone | (%) | 0 | 42 | 63 |
| Titre (dTex) | Initial | | 237 | 127 |
| | Final | | 468 | 350 |
| Force (N) | 20 mm/min | 0,1624 | 1,483 | 2,063 |
| | 100 mm/min | 0,335 | 1,641 | 2,394 |

Ainsi, on peut comprendre que l'expression « grip » telle qu'utilisée dans la présente demande de brevet représente l'aptitude d'un fil à avoir une meilleur adhérence et à diminuer le phénomène de glissement, et dont la valeur est mesurée en Newtons selon la méthode expliquée ci-dessus.

Selon encore un autre objet de la présente invention, il est prévu un procédé de réalisation d'au moins un fil textile (F) selon la revendication 1 selon lequel :
- on amène au moins un fil de base (1) à un poste d'enduction (6-8) d'un polymère siliconé (2);
- on réticule le ou les fils enduits de polymère siliconé en le ou les passant dans un four (9);
- on soumet le ou les fil(s) enduit(s) de polymère et réticulé(s) (F) à une opération d'ensimage (10) ;
- le procédé étant caractérisé en ce que les fils de base sont amenés, au niveau du poste d'enduction, dans des rainures d'un rouleau rotatif motorisé (6) trempant dans un bain de polymère siliconé (7) et un contre-rouleau (8).

De préférence, la réticulation à lieu à une température comprise entre 150°C à 350°C pendant 3 à 10 secondes.

Les agencements du rouleau motorisé, sont constitués par des rainures dans lesquelles sont engagées séparément les fils à traiter. Les formes et dimensions de rainures sont fonction de la grosseur du fil à traiter, afin de calibrer l'épaisseur du polymère siliconé sur ledit fil et la concentricité du fil par rapport audit polymère. La profondeur de la rainure est de préférence au moins le double du diamètre du fil d'âme pour une obtenir une enduction au minimum de 15% en poids de polymère siliconé sur le fil par rapport au poids total du fil enduit.

Pour résoudre le problème posé d'obtenir une bonne enduction du fil de base, le rouleau rotatif motorisé est assujetti à un moteur à vitesse variable, ce qui permet de prélever le polymère siliconé dans le bain dans des quantités suffisantes.

Ainsi, et comme indiqué ci-dessus, les fils de base sont amenés, au niveau du poste d'enduction, entre un rouleau rotatif motorisé (6) et un contre-rouleau (8), c'est-à-dire dans des rainures d'un rouleau motorisé (6) trempant dans un bain de polymère siliconé (7). Les rainures sont pratiquées dans la surface périphérique du rouleau, sensiblement à l'orthogonale ou, autrement dit, perpendiculaire, à l'axe de rotation dudit rouleau. Ainsi, à cause de la viscosité du polymère siliconé, les rainures se remplissent de celui-ci, et les fils, qui passent dans les rainures, passent à leur tour dans le polymère siliconé et ressortent des rainures recouverts dudit polymère. On préfère que les rainures présentent un angle d'ouverture, mesuré du fond de la rainure, de 60°. Par la même occasion, il a été déterminé que la profondeur de la rainure jouait un rôle dans le recouvrement des fils de base par le polymère siliconé. Ainsi, il est préférable de prévoir des rainures qui présentent une profondeur qui est au moins le double du diamètre du fil de base. Enfin, le profil détaillé du fond de la rainure n'est pas angulaire, mais arrondi, et présente de préférence un rayon de courbure compris entre 0,1 à 0,8 mm. Cette forme arrondie facilite le nettoyage des rainures du rouleau motorisé de façon à maintenir un poste d'enduction avec des conditions reproductibles dans le temps. En outre, cette forme permet de mieux épouser la forme du fil et donne une meilleure répartition du polymère siliconé autour du fil.

Par ailleurs, il a été constaté que la façon d'amener les fils dans le rouleau motorisé pouvait avoir une influence sur le recouvrement des fils de base par le polymère siliconé. Ainsi, il est préférable d'amener les fils vers ledit rouleau motorisé à un angle d'attaque ou d'amenée tangent à la surface périphérique dudit rouleau motorisé, optionnellement avec un écart de-moins 5° par rapport à la tangente.

En ce qui concerne le contre-rouleau, il a été déterminé que celui-ci pouvait permettre d'optimiser la formation d'un talon de polymère siliconé s'il appliquait une pression sur le rouleau motorisé comprise entre 0,5 et 1,5 bar. Ce talon de polymère siliconé présente de préférence une hauteur égale à 5mm +/- 2 mm. Il est possible de maintenir la hauteur de talon désirée en contrôlant la vitesse d'enduction, qui est de manière préférentielle, au moins de l'ordre de 0,20 mètres/min, et qui peut être augmentée en fonction du taux de consommation du polymère siliconé dans le bain d'enduction. Cette vitesse d'enduction permet également de s'assurer qu'aucune, ou sensiblement aucune, bulle ne se forme dans dans la couche de polymère siliconé qui vient entourer le fil de base.

Dans une forme de réalisation préférée, le poste d'ensimage comprend un rouleau applicateur qui trempe dans un bain constitué classiquement par une huile d'ensimage.

Selon d'autres caractéristiques, en amont du poste d'enduction, le procédé comprend l'utilisation d'un cantre équipé d'un dispositif de tension actif et un tambour motorisé asservi par un capteur pour délivrer le fil à tension constante et, en aval du poste d'ensimage, l'installation comprend des moyens d'entrainement du fil enduit de polymère et des moyens de réception dudit fil. Il est donc intéressant de pouvoir maintenir les fils à une tension qui leur permettent de ne pas s'affaisser, et ainsi passer trop de temps dans le bain, ou encore être trop tendus, et risque de se casser avant la fin du traitement. Il est donc préférable de maintenir la tension du fil pendant le traitement à une valeur inférieure ou égale à 2% de la charge du rupture du fil de base.

Selon encore un autre objet de la présente invention, il est prévu un article textile tissé ou tricoté, intégrant un ou plusieurs fils selon l'invention et tel que décrit ci-dessus. De préférence, cet article se présente sous forme d'article chaussant. Selon un mode d'exécution préféré, l'article textile tissé ou tricoté présente une zone anti-glisse composée de fils enduits selon l'invention.

L'invention sera exposée plus en détails ci-après à l'aide d'exemples illustratifs et les figures des dessins annexés dans lesquels :
- la Figure 1 est une vue à caractère schématique montrant l'installation pour la mise en œuvre du procédé de réalisation des fils selon les caractéristiques de l'invention ;
- la Figure 2 est à très grande échelle une vue .en coupe d'un fil selon les caractéristiques de l'invention ;
- la Figure 3 est une vue en coupe transversale, ou section, d'un fil textile enduit selon la présente invention faite par microscopie électronique à balayage (MEB), à une échelle de 200 micromètres et un grossissement de 500 fois.

Comme indiqué, l'invention concerne un fil textile constitué par un fil de base (1) de tout type connu et approprié, par exemple une âme polyamide, en polyester ou en verre. Ce fil de base est enduit d'un polymère siliconé (2). La composition du polymère siliconé est déterminée en fonction des qualités recherchées pour le fil, par exemple anti-glisse, tenue thermique, comportement au feu, isolation thermique, isolation phonique, amortissement des chocs, etc. Il suffit de rajouter certains additifs au polymère siliconé. Le polymère siliconé est de préférence bicomposant sous forme d'huile et un catalyseur, et se présente sous forme liquide à température ambiante. Un tel polymère a été trouvé, par exemple, sous la référence Bluesil TCS 7513 A+B, commercialisée par la société Bluestar Silicones France, anciennement la société Rhodia Silicones. Ce mélange liquide bicomposant, qui n'est pas une solution diluée, est un élastomère siliconé liquide bi-composant, dans lequel le composant B est un catalyseur permettant la réticulation du silicone par polyaddition à température élevée, autour de 150°C. Le mélange présente une viscosité de 2500 mPa.s.

Le ou les fils (F) ainsi constitués, selon une caractéristique à la base de l'invention, doivent pouvoir être tissés ou tricotés non seulement avec des fils présentant les mêmes caractéristiques, mais également avec tout autre type de fils, par exemple, pour être transformé en un article textile tissé ou tricoté, tel un article chaussant ou tout autre article semblable.

Pour l'essentiel, pour la réalisation des fils (F) selon l'invention, un fil (1) ou une nappe de fils (1), est soumis à une opération d'enduction d'un polymère siliconé, puis à une opération de réticulation et d'ensimage.

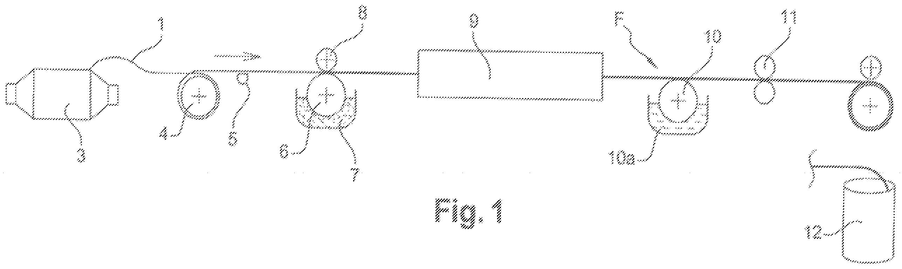

On renvoie à la figure 1 qui montre schématiquement une installation pour la mise en œuvre du procédé.

Les ou les fils (1) sont introduits dans la machine au moyen d'un cantre (3) assujetti à un système de tension actif. Pour obtenir cette tension constante, à la sortie du cantre (3), le ou les fils de base (1) sont soumis à l'action d'un rouleau (4) entrainé par un moteur pas à pas et piloté par un capteur de tension (5). Le rouleau motorisé (4) donne la tension souhaitée au fil et régule les à-coups provenant du dévidage. Les fils de base (1) peuvent avantageusement être traités thermiquement pour éviter tout phénomène de retrait.

Le fil ou les fils de base (1) sont ensuite soumis à l'action d'un poste d'enduction. Ce poste comprend un rouleau rotatif (6) motorisé qui trempe dans un bain de polymère siliconé (7). Le rouleau motorisé (6) coopère avec un rouleau de contre appui (8). Le rouleau motorisé (6) est entrainé positivement par un moteur à vitesse variable sans pour autant exercer une tension sur le ou les fils (1) à traiter. Le bain de polymère siliconé (7) est un bain bi-composant composé d'huile et d'un catalyseur. Le rouleau motorisé (6) comprend, de préférence, perpendiculairement à ses génératrices, une série de rainures dont les formes et dimensions sont déterminées en fonction de la grosseur du fil de base à traiter. Ainsi le ou les fils (1) sont engagés dans la ou les rainures du rouleau rotatif (6) et se chargent en polymère siliconé. Chaque rainure permet au polymère siliconé (2) de rester à la périphérie du fil (1) sans pénétrer au fond de ce dernier. Chaque rainure est conçue pour présenter un angle d'ouverture, une profondeur, et un profil de fond qui empêche le fil de se coincer dans la rainure, sans lui appliquer une tension, et tout en assurant le recouvrement du fil par au moins 15% en poids, par rapport au poids total du fil enduit, de polymère siliconé. Un talon de silicone se forme à l'entrée du rouleau (6) afin que le fil soit bien enrobé du polymère siliconé, le talon présentant une hauteur prédéterminée et maintenue à la hauteur voulue en jouant sur la vitesse d'enduction,qui à son tour dépend de la consommation du polymère siliconé dans le bain. Les caractéristiques dimensionnelles des rainures permettent de calibrer l'épaisseur du polymère siliconé (2) sur le fil de base (1) et d'assurer la concentricité dudit fil par rapport audit polymère.

A la sortie du poste d'enduction tel que défini, le fil siliconé (F) est engagé dans un dispositif de réticulation constitué par un four à infra rouge à ondes moyennes (9). Par exemple, la longueur du four est de 2,40 mètres pour une vitesse moyenne de 40 mètres par minute. Le four est porté à une température moyenne de 200°C.

A la sortie du four (9) le fil siliconé (F) est réticulé et soumis à l'action d'un poste d'ensimage (10). Dans ce but l'huile d'ensimage (10a) peut être appliquée par un rouleau (10). L'huile d'ensimage est déterminée et sélectionnée pour sa compatibilité avec le polymère siliconé et pour son pouvoir lubrifiant.

A la sortie du poste d'ensimage (10), le fil siliconé (F) est soumis à l'action d'un rouleau d'entrainement (11) qui exerce un effort de traction sur l'ensemble du ou des fils et détermine par conséquent la vitesse linéaire du procédé. Dans une variante du procédé, on peut également inverser l'étape d'ensimage et l'action du rouleau d'entraînement.

Le ou les fils siliconés ainsi obtenus sont ensuite réceptionnés. Dans ce but, d'une manière préférée, le ou les fils obtenus sont lovés dans un pot (12). Ce mode de réception et de conditionnement permet, si nécessaire, de finir le processus de régulation dans un espace chauffé et cela sans inconvénient sur la qualité du fil obtenu. Il en résulte également une optimisation du rendement de la ligne d'enduction en réduisant les interventions ou arrêts de la ligne.

Ce mode de conditionnement laisse le choix du type de bobinage qui sera adapté en fonction de l'utilisation ultérieur des fils siliconés selon les caractéristiques de l'invention (bobine conique, cylindrique).

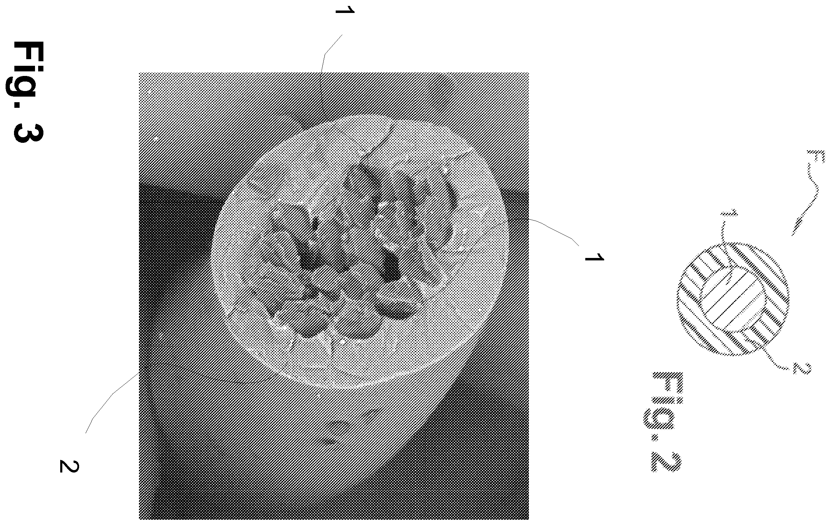

Comme illustré par la Figure 3, représentant une photo prise par microscopie électronique à balayage (MEB), un fil ou plusieurs fils de polyamide enduits de polymère siliconé selon l'invention présente deux couches bien distinctes :
- l'âme (2), où les fils de base demeurent intactes ; et
- la couche extérieure de polymère siliconé (1), qui s'accrochent à la surface des fils de base, mais qui ne s'entremêle pas avec ces derniers, et qui en outre ne présente quasiment aucune bulle, susceptible de provoquer la rupture ou une dégradation du fil lors de son tricotage ou tissage.

En fonction de la nature du fil de base enduit de polymère siliconé et de la composition dudit polymère, il est possible d'obtenir les résultats suivants :
- effet antiglisse pour articles chaussants, par exemple, des chaussettes, des bas, des manchons, en utilisant, par exemple, un fil polyamide enduit de polymère siliconé ;
- tenue thermique, et comportement au feu pour réaliser un tissu technique à partir d'un fil de verre enduit de polymère siliconé ;
- textile actif, les agents actifs contenus dans le polymère siliconé, sont libérés au contact de la peau ;
- effet d'amortissement et d'isolation thermique, par exemple, une bouclette tricotée avec un fil de base enduit de polymère siliconé ;
- résistance à la coupure combinée à une isolation thermique en utilisant une âme sous forme d'un fil aramide renforcé inox, enduit du polymère siliconé.

Les différents avantages ressortent bien de la description, ainsi que les variantes possibles.

## Revendications

1. Fil textile comprenant un fil de base (1) enduit d'un polymère siliconé (2), ledit fil siliconé (F) étant apte à être tissé ou tricoté, **caractérisé en ce que** :
le polymère siliconé se présente sous forme de gaine concentrique autour du fil de base ;
le fil textile enduit est calibré et comporte entre 15% et 85% en poids de polymère siliconé réticulé par rapport au poids total du fil enduit.

2. Fil textile selon la revendication 1, dans lequel le fil de base est choisi dans le groupe consistant en :
- les fils synthétiques;
- les fils d'origine minérale
- les fils naturels, et
- les fils hybrides ou dérivés.

3. Fil textile selon l'une quelconque des revendications précédentes, dans lequel le fil de base est choisi dans le groupe consistant en les fils de polyamide, les fils de polyester, et les fils de verre.

4. Fil textile selon l'une quelconque des revendications précédentes, dans lequel le fil enduit présente un titre supérieur ou égal à 25 décitex.

5. Fil textile selon l'une quelconque des revendications précédentes, dans lequel le fil de base présente un titre compris entre 22 décitex et 5000 décitex.

6. Fil textile selon l'une quelconque des revendications précédentes, dans lequel le polymère siliconé comprend au moins un polyorganosiloxane.

7. Fil textile selon l'une quelconque des revendications précédentes, dans lequel le polymère siliconé est constitué d'un mélange de deux polyorganosiloxanes.

8. Fil textile selon l'une quelconque des revendications précédentes, dans lequel le polymère siliconé est constitué d'un mélange de deux polyorganosiloxanes, et dont l'un des composants est un catalyseur de la réaction de polymérisation.

9. Fil textile selon l'une quelconque des revendications précédentes, dans lequel le polymère siliconé est constitué d'un mélange bicomposant de polyorganosiloxanes, appliqué sous forme d'élastomère à l'état liquide avant polymérisation.

10. Fil textile selon l'une quelconque des revendications précédentes, dans lequel le polymère siliconé est constitué d'un mélange bicomposant de polyorganosiloxanes se réticulant par une réaction de polyaddition à une température comprise entre 150°C et 350°C.

11. Fil textile selon l'une quelconque des revendications précédentes, dans lequel le polymère siliconé est constitué d'un mélange bicomposant de polyorganosiloxanes présentant une viscosité dynamique, mesurée sur viscosimètre BROOKFIELD, aiguille 2, vitesse 5 tours/min, à une température de 23°C, comprise entre 0,5 Pa.s et 20000 mPa.s.

12. Fil textile selon l'une quelconque des revendications précédentes, dans lequel le polymère siliconé est constitué d'un mélange bicomposant de polyorganosiloxanes présentant une viscosité de 2500 mPa.s, mesurée par viscosimètre Brookfield, aiguille numéro 2, vitesse de rotation 5 tours/min.

13. Fil textile selon l'une quelconque des revendications précédentes, dans lequel la couche de polymère siliconé réticulé présente un taux de bulles d'air inférieur à une bulle par centimètre de fil enduit.

14. Fil textile selon l'une quelconque des revendications précédentes, dans lequel le fil tricoté présente un « grip » mesuré selon la méthode suivante :
- on fixe un frotteur métallique de 248 grammes et de surface carré 25cm² à un capteur de force ;
- on déplace ledit frotteur sur un échantillon tricoté de fil enduit, fixé sur un support horizontal ;
- on mesure la force nécessaire pour maintenir le frotteur en mouvement à vitesse constante ;
- les valeurs de « grip » étant comprises entre 0,7 N et 2,4 N à 20°C ± 2°C, et 65°C ± 5% HR (humidité relative), pour une vitesse constante de 20 mm/min.

15. Fil textile selon l'une quelconque des revendications précédentes, dans lequel le fil tricoté présente un « grip » mesuré selon la méthode suivante :
- on fixe un frotteur métallique de 248 grammes et de surface carré 25cm² à un capteur de force ;
- on déplace ledit frotteur sur un échantillon tricoté de fil textile enduit, fixé sur un support horizontal ;
- on mesure la force nécessaire pour maintenir le frotteur en mouvement à vitesse constante ;
- les valeurs de « grip » étant comprises entre 0,8 N et 2,8 N à 20°C ± 2°C, et 65% ± 5% HR (humidité relative), pour une vitesse constante de 100 mm/min.

16. Procédé de réalisation d'au moins un fil textile (F) selon la revendication 1 selon lequel :
- on amène au moins un fil de base (1) à un poste d'enduction (6-8) d'un polymère siliconé (2);
- on réticule le ou les fils enduits de polymère siliconé en le ou les passant dans un four (9);
- on soumet le ou les fil(s) enduit(s) de polymère et réticulé(s) (F) à une opération d'ensimage (10) ;
- **caractérisé en ce que** les fils de base sont amenés, au niveau du poste d'enduction, dans des rainures d'un rouleau rotatif motorisé (6) trempant dans un bain de polymère siliconé (7) et un contre-rouleau (8).

17. Procédé selon la revendication 16, dans lequel la réticulation à lieu à une température comprise entre 150°C et 350°C pendant 3 à 10 secondes.

18. Procédé selon l'une quelconque des revendications 16 ou 17 précédentes, dans lequel les fils de base sont amenés dan les rainures du rouleau motorisé (6), qui présentent un angle d'ouverture de 60°.

19. Procédé selon l'une quelconque des revendications 16 à 18 précédentes, dans lequel les fils de base sont amenés dans les rainures du rouleau motorisé (6), et dont la profondeur est au moins le double du diamètre du fil de base.

20. Procédé selon l'une quelconque des revendications 16 à 19 précédentes, dans lequel les fils de base sont amenés dans les rainures du rouleau motorisé (6), et dont le rayon de courbure du fond de la rainure est de 0,1 à 0,8 mm.

21. Procédé selon l'une quelconque des revendications 16 à 20 précédentes, dans lequel les fils sont amenés dans le rouleau motorisé (6) à un angle d'attaque ou d'amenée tangent à la surface périphérique du rouleau motorisé, optionnellement avec un écart de moins 5° par rapport à la tangente.

22. Procédé selon l'une quelconque des revendications 16 à 21 précédentes, dans lequel le contre-rouleau applique une pression sur le rouleau motorisé, comprise entre 0,5 et 1,5 bar.

23. Procédé selon l'une quelconque des revendications 16 à 22 précédentes, dans lequel les fils sont amenés entre le rouleau motorisé (6) et le contre-rouleau (8) et passent dans un talon de polymère de siliconé d'une hauteur égale à 5mm +/- 2 mm.

24. Procédé selon l'une quelconque des revendications 16 à 23 précédentes, dans lequel la tension du fil pendant le traitement est inférieure ou égale à 2% de la charge de rupture du fil de base.

25. Procédé selon l'une quelconque des revendications 16 à 24 précédentes, dans lequel la vitesse du rouleau motorisé est au moins égale à 0,20 mètres/minute.

26. Article textile tissé ou tricoté, intégrant un ou plusieurs fils selon l'une quelconque des revendications 1 à 15.

27. Article textile selon la revendication 26, sous forme d'article chaussant.

28. Article textile selon la revendication 26 ou la revendication 27, présentant une zone anti-glisse composée de fils enduits selon l'une quelconque des revendications 1 à 15.

## Patentansprüche

1. Textilgarn umfassend ein Grundgarn (1), das mit einem silikonhaltigen Polymer (2) beschichtet ist, wobei das silikonhaltige Garn (F) dafür geeignet ist, gewebt oder gestrickt zu werden, **dadurch gekennzeichnet, dass**:
das silikonhaltige Polymer in Form einer konzentrischen Hülle um das Grundgarn herum vorliegt;
das beschichtete Textilgarn kalibriert ist und zwischen 15 und 85 Gew.-% vernetztes silikonhaltiges Polymer, bezogen auf das Gesamtgewicht des beschichteten Garns, umfasst.

2. Textilgarn nach Anspruch 1, wobei das Grundgarn aus der Gruppe ausgewählt ist, die aus folgenden Garnen besteht:
synthetischen Garnen;
Garnen mineralischen Ursprungs;
natürlichen Garnen, und
Hybridgarnen oder davon abgeleiteten Garnen.

3. Textilgarn nach irgendeinem der vorhergehenden Ansprüchen, wobei das Grundgarn aus der Gruppe ausgewählt ist, die aus Polyamidgarnen, Polyestergarnen und Glasgarnen besteht.

4. Textilgarn nach irgendeinem der vorhergehenden Ansprüchen, wobei das beschichtete Garn einen Titer von 25 dtex oder mehr aufweist.

5. Textilgarn nach irgendeinem der vorhergehenden Ansprüchen, wobei das Grundgarn einen Titer zwischen 22 dtex und 5000 dtex aufweist.

6. Textilgarn nach irgendeinem der vorhergehenden Ansprüchen, wobei das Silikonpolymer mindestens ein Polyorganosiloxan umfasst.

7. Textilgarn nach irgendeinem der vorhergehenden Ansprüchen, wobei das Silikonpolymer aus einer Mischung von zwei Polyorganosiloxanen besteht.

8. Textilgarn nach irgendeinem der vorhergehenden Ansprüchen, wobei das Silikonpolymer aus einer Mischung von zwei Polyorganosiloxanen besteht, und wobei eine der Komponenten ein Katalysator für die Polymerisationsreaktion ist.

9. Textilgarn nach irgendeinem der vorhergehenden Ansprüchen, wobei das Silikonpolymer aus einer Zweikomponentenmischung von Polyorganosiloxanen besteht, die vor der Polymerisation als Elastomer in flüssigem Zustand aufgetragen wird.

10. Textilgarn nach irgendeinem der vorhergehenden Ansprüchen, wobei das Silikonpolymer aus einer Zweikomponentenmischung von Polyorganosiloxanen besteht, die durch eine Polyadditionsreaktion bei einer Temperatur zwischen 150°C und 350°C vernetzt werden.

11. Textilgarn nach irgendeinem der vorhergehenden Ansprüchen, wobei das Silikonpolymer aus einer Zweikomponentenmischung von Polyorganosiloxanen besteht, die eine dynamische Viskosität, gemessen auf einem BROOKFIELD-Viskosimeter, Nadel 2, Geschwindigkeit 5 U/min., bei einer Temperatur von 23°C, zwischen 0,5 Pa.s und 20000 mPa.s aufweist.

12. Textilgarn nach irgendeinem der vorhergehenden Ansprüchen, wobei das Silikonpolymer aus einer Zweikomponentenmischung von Polyorganosiloxanen besteht, die eine Viskosität von 2500 mPa.s, gemessen mit einem Brookfield-Viskosimeter, Nadel Nummer 2, Drehzahl 5 U/min., aufweist.

13. Textilgarn nach irgendeinem der vorhergehenden Ansprüchen, wobei die Schicht aus vernetztem Silikonpolymer einen Luftblasenanteil von weniger als einer Blase pro Zentimeter des beschichteten Garns aufweist.

14. Textilgarn nach irgendeinem der vorhergehenden Ansprüchen, wobei das Strickgarn einen "Grip" aufweist, der nach folgender Methode gemessen wird:
ein Metallschleifer mit einem Gewicht von 248 Gramm und einer quadratischen Fläche von 25 cm2 wird an einem Kraftsensor befestigt;
der Schleifer wird über ein gestricktes Muster des beschichteten Garns bewegt, das auf einer horizontalen Unterlage befestigt ist;
die um den Schleifer bei konstanter Geschwindigkeit in Bewegung zu halten erforderliche Kraft wird gemessen;
wobei die "Grip"-Werte zwischen 0,7 N und 2,4 N bei 20°C ± 2°C, und 65°C ± 5% rF (relative Luftfeuchtigkeit), bei einer konstanten Geschwindigkeit von 20 mm/min., liegen.

15. Textilgarn nach irgendeinem der vorhergehenden Ansprüchen, wobei das Strickgarn einen "Grip" aufweist, der nach folgender Methode gemessen wird:
ein Metallschleifer mit einem Gewicht von 248 Gramm und einer quadratischen Fläche von 25 cm2 wird an einem Kraftsensor befestigt;
der Schleifer wird über ein gestricktes Muster des beschichteten Textilgarns bewegt, das auf einer horizontalen Unterlage befestigt ist;
- die um den Schleifer bei konstanter Geschwindigkeit in Bewegung zu halten erforderliche Kraft wird gemessen;
wobei die "Grip"-Werte zwischen 0,8 N und 2,8 N bei 20°C ± 2°C und 65% ± 5% rF (relative Luftfeuchtigkeit) bei einer konstanten Geschwindigkeit von 100 mm/min. liegen.

16. Verfahren zur Herstellung von mindestens einem Textilgarn (F) nach Anspruch 1, wobei:
mindestens ein Grundgarn (1 ) einer Beschichtungsstation (6-8) eines Silikonpolymers (2) zugeführt wird;
das oder die mit Silikonpolymer beschichteten Garne vernetzt werden, indem es oder sie durch einen Ofen (9) geleitet wird oder werden;
das oder die mit Polymer beschichteten und vernetzten Garne (F) einem Schlichtvorgang (10) unterzogen werden;
**dadurch gekennzeichnet, dass** die Grundgarne an der Beschichtungsstation in die Rillen einer motorisierten Drehwalze (6), die in ein Bad aus silikonhaltigem Polymer (7) eintaucht, und einer Gegenwalze (8) zugeführt werden.

17. Verfahren nach Anspruch 16, wobei die Vernetzung bei einer Temperatur zwischen 150°C und 350°C für 3 bis 10 Sekunden stattfindet.

18. Verfahren nach irgendeinem der vorhergehenden Ansprüche 16 oder 17, wobei die Grundgarne in die Rillen der motorisierten Drehwalze (6) geführt werden, und die Rillen einen Öffnungswinkel von 60° aufweisen.

19. Verfahren nach irgendeinem der vorhergehenden Ansprüche 16 bis 18, wobei die Grundgarne in die Rillen der motorisierten Drehwalze (6) zugeführt werden und deren Rillentiefe mindestens das Doppelte des Durchmessers des Grundgarns beträgt.

20. Verfahren nach irgendeinem der vorhergehenden Ansprüche 16 bis 19, wobei die Grundgarne in die Rillen der motorisierten Drehwalze (6) zugeführt werden, und wobei das Rillenboden einen von 0,1 bis 0,8 mm Krümmungsradius aufweist.

21. Verfahren nach irgendeinem der vorhergehenden Ansprüche 16 bis 20, wobei die Garne in die motorisierte Drehwalze (6) unter einem Angriffs- oder Zuführungswinkel, der tangential zur Umfangsfläche der motorisierten Drehwalze ist, gegebenenfalls mit einer Abweichung von minus 5° von der Tangente, zugeführt werden.

22. Verfahren nach irgendeinem der vorhergehenden Ansprüche 16 bis 21, wobei die Gegenwalze einen Druck auf die motorisierte Walze ausübt, der zwischen 0,5 und 1,5 bar liegt.

23. Verfahren nach irgendeinem der vorhergehenden Ansprüche 16 bis 22, bei dem die Garne zwischen der motorisierten Drehwalze (6) und der Gegenwalze (8) zugeführt werden und durch einen Wulst aus Silikonpolymer mit einer Höhe von 5 mm +/- 2 mm laufen.

24. Verfahren nach irgendeinem der vorhergehenden Ansprüche 16 bis 23, wobei die Garnspannung während der Verarbeitung weniger als oder gleich 2% der Bruchlast des Grundgarns beträgt.

25. Verfahren nach irgendeinem der vorhergehenden Ansprüche 16 bis 24, wobei die Geschwindigkeit der motorisierten Drehwalze mindestens 0,20 Meter/Minute beträgt.

26. Gewebter oder gestrickter Textilartikel, in den ein oder mehrere Garne nach irgendeinem der Ansprüche 1 bis 15 integriert sind.

27. Textiler Artikel nach Anspruch 26 in Form eines Fußbekleidungsartikels.

28. Textiler Artikel nach Anspruch 26 oder 27, der eine rutschhemmende Zone aus beschichteten Garnen nach irgendeinem der Ansprüche 1 bis 15 aufweist.

## Claims

1. Textile yarn comprising a core yarn (1) coated in a silicone polymer (2), the siliconized yarn (F) being adapted for weaving or knitting, **characterized in that**:
the silicone polymer is present as a concentric sheath around the core yarn;
the coated textile yarn is calibrated and includes between 15% and 85% by weight of reticulated silicone polymer relative to the total weight of coated yarn.

2. Textile yarn according to claim 1, wherein the core yarn is chosen from the group consisting of:
synthetic yarns;
yarns of mineral origin;
natural yarns, and
hybrid or derived yarns.

3. Textile yarn according to any one of the preceding claims, wherein the core yarn is chosen from the group consisting of polyamide yarns, polyester yarns, and glass fibre yarns.

4. Textile yarn according to any one of the preceding claims, wherein the coated yarn has a count greater than or equal to 25 dtex.

5. Textile yarn according to any one of the preceding claims, wherein the core yarn has a count comprised between 22 dtex and 5000 dtex.

6. Textile yarn according to any one of the preceding claims, wherein the silicone polymer comprises at least one polyorganosiloxane.

7. Textile yarn according to any one of the preceding claims, wherein the silicone polymer is made up of a mixture of two polyorganosiloxanes.

8. Textile yarn according to any one of the preceding claims, wherein the silicone polymer is made up of a mixture of two polyorganosiloxanes, one of whose components is a catalyst for the polymerization reaction.

9. Textile yarn according to any one of the preceding claims, wherein the silicone polymer is made up of a bi-component mixture of polyorganosiloxanes, applied as an elastomer in liquid form before polymerization.

10. Textile yarn according to any one of the preceding claims, wherein the silicone polymer is made up of a bi-component mixture of polyorganosiloxanes which are reticulated via a polyaddition reaction at a temperature comprised between 150°C and 350°C.

11. Textile yarn according to any one of the preceding claims, wherein the silicone polymer is made up of a bi-component mixture of polyorganosiloxanes having a dynamic viscosity, measured on a BROOKFIELD viscometer, number 2 needle, at a speed of 5 revolutions/min, and a temperature of 23°C, comprised between 0.5 Pa.s and 20000 mPa.s.

12. Textile yarn according to any one of the preceding claims, wherein the silicone polymer is made up of a bi-component mixture of polyorganosiloxanes having a viscosity of 2500 mPa.s, measured by a Brookfield viscometer, number 2 needle, at a speed of 5 revolutions/min.

13. Textile yarn according to any one of the preceding claims, wherein the layer of reticulated silicone polymer has a level of air bubbles of less than one bubble per centimetre of coated yarn.

14. Textile yarn according to any one of the preceding claims, wherein the knitted yarn has a "grip" as measured according to the following method:
a 248 gram metal friction plate having a 25cm2 surface area is attached to a force sensor;
said friction plate is moved across a knitted sample of coated yarn, which is attached to a horizontal support;
the force required to maintain the friction plate in movement at constant speed is measured;
wherein the "grip" values are comprised between 0.7 N and 2.4 N at 20°C ± 2°C, and 65°C ± 5% RH (relative humidity), for a constant speed of 20 mm/min.

15. Textile yarn according to any one of the preceding claims, wherein the knitted yarn has a "grip" as measured according to the following method:
a 248 gram metal friction plate having a 25cm2 surface area is attached to a force sensor;
the friction plate is moved across a knitted sample of the coated textile yarn, which is attached to a horizontal support;
- the force required to maintain the friction plate in movement at constant speed is measured;
wherein the "grip" values are comprised between 0.8 N and 2.8 N at 20°C ± 2°C, and 65% ± 5% RH (relative humidity), for a constant speed of 100 mm/min.

16. Process for the manufacture of at least one textile yarn (F) according to claim 1, wherein:
a core yarn (1) is led into a silicone polymer (2)coating station (6-8);
the silicone polymer coated yarn or yarns are reticulated by passing them through an oven (9);
the polymer coated and reticulated yarn or yarns (F) are subjected to a finishing operation (10);
**characterized in that**, at the coating station, the core yarn or yarns are led through the grooves of a motorized drive roller (6) which is bathing in a bath of silicone polymer (7), and a counter-roller (8).

17. Process according to claim 16, wherein reticulation takes place at a temperature comprised between 150°C and 350°C fort 3 to 10 seconds.

18. Process according to any one of previous claims 16 or 17, wherein the core yarns are led into the grooves of the motorized roller (6), the grooves having an opening angle of 60°.

19. Process according to any one of the preceding claims 16 to 18, wherein the core yarns are led into the grooves of the motorized roller (6), the grooves having a depth which is at least double that of the diameter of the core yarn.

20. Process according to any one of the preceding claims 16 to 19, wherein the core yarns are led into the grooves of the motorized roller (6), and for which the radius of curvature of the base of the groove is from 0.1 to 0.8 mm.

21. Process according to any one of the preceding claims 16 to 20, wherein the yarns are led to the motorized roller (6) at an angle of attack or lead angle tangential to the peripheral surface of the motorized roller, optionally with a variation of less than 5° relative to the tangent.

22. Process according to any one of the preceding claims 16 to 21, in which the counter-roller applies a pressure to the motorized roller, which is comprised between 0.5 and 1.5 bar.

23. Process according to any one of the preceding claims 16 to 22, wherein the yarns are led between the motorized roller (6) and the counter-roller (8) and pass through a heel of silicone polymer having a height equal to 5 mm +/- 2 mm.

24. Process according to any one of the preceding claims 16 to 23, wherein the yarn tension during treatment is less than or equal to 2% of the breaking strain of the core yarn.

25. Process according to any one of the preceding claims 16 to 24, wherein the speed of the motorized roller is at least equal to 0.20 metres/minute.

26. Woven or knitted textile article, integrating one or more yarns according to any one of claims 1 to 15.

27. Textile article according to claim 26, in the shape of a footwear article.

28. Textile article according to claim 26 or claim 27, having an anti-slip zone composed of coated yarn according to any one of claims 1 to 15.
